# DEMANDE DE BREVET EUROPEEN

(11) **EP 2 508 870 A1**
(43) Date de publication de la demande: **10.10.2012**
(21) Numéro de dépôt: 11290169.9
(22) Date de dépôt: 05.04.2011
(51) Int. Cl.: G01N 21/89

(54) **Dispositif d'inspection de bande en défilement**

(71) Demandeur: Siemens Vai Metals Technologies SAS, 42403 Saint-Chamond (FR)
(72) Inventeur: Deschamps, Olivier, 69440 Mornant (FR); Peyssard, Mathieu, 78400 Chatou (FR)
(74) Mandataire: Fischer, Michael

(57) **Abrégé**

La présente invention décrit un dispositif d'inspection de bande (B) en défilement comprenant un premier arrangement d'illumination (ILLU1) sur une zone couvrant au moins la largeur de la bande et un deuxième arrangement d'acquisition d'images (C) de ladite zone,
caractérisé par :
- un troisième arrangement d'illumination (ILLU2) sur la zone,
- le dit troisième arrangement illuminant sous une longueur d'onde différente d'une longueur d'onde d'illumination du premier arrangement ,
- et des angles d'incidence (α, β) des axes optiques principaux d'illumination du premier et du troisième arrangement sont différents par rapport à la direction (D) de défilement de la bande, ainsi qu'à une direction (γ) d'un axe optique principal du deuxième arrangement d'acquisition d'images comprenant un mode d'acquisition de deux images simultanées sous deux spectres centrés sur les deux longueurs d'ondes,
- le mode d'acquisition étant au moins régi par une vitesse d'acquisition d'image définie en fonction d'une vitesse de défilement de la bande et d'au moins une valeur de seuil minimal de rapport signal-bruit extraite des deux spectres d'acquisition..

## Description

La présente invention concerne un dispositif d'inspection de bande en défilement selon le préambule de la revendication 1.

Un dispositif connu d'inspection automatique de bande en défilement, en particulier dans le cadre de contrôle de qualité contre des défauts issus de la manufacture de bande d'acier apte à être bobinées, comprend un premier arrangement d'illumination sur une zone ayant au moins la largeur de la bande et un deuxième arrangement d'acquisition d'images de ladite zone. De tels arrangements sont par exemple bien décrits au travers du brevet FR 05 13105 présentant comme arrangement d'illumination une rampe comportant une série de diodes lumineuses disposés sur la largeur de la rampe et une optique permettant de générer un rideau de lumières provenant des diodes électroluminescentes à haute puissance et traversant au moins la largeur de la bande en défilement. L'arrangement d'acquisition d'image comporte au moins une caméra (au moins linéaire) dont la vitesse d'acquisition est suffisamment rapide en fonction de la vitesse de défilement de la bande pour obtenir des séquences de portion de bandes permettant de reconstituer une image de la bande complète. Les deux arrangements présentent deux axes optiques principaux faisant un angle dit de triangulation et intersécants sur la bande. Usuellement des diodes de couleurs (ou longueurs d'ondes) diverses peuvent être choisies pour être installées dans une rampe et la caméra, usuellement une simple caméra noir et blanc (niveau de gris) présente un moyen de filtrage de ladite couleur.

Une alternative connue afin d'augmenter la qualité d'inspection de défauts détectés selon le principe précité, il est possible d'ajouter des caméras telle que celle susmentionnée, lesdites caméras ayant leurs axes optiques faisant des angles différents avec la direction de défilement de la bande. De cette façon, des profils d'observation de défauts à caractère oblique ou plus rasant peuvent être obtenues. Pour de hautes vitesses de défilement de la bande (par exemple supérieure à 10 m/s), il est prévisible que chaque caméra à balayage ultrarapide fournit un très haut flux de données de mesures. Ainsi, la disposition de plusieurs caméras démultiplie fatalement ce flux de données, ce qui requiert donc de prévoir des installations de plus en plus complexes et coûteuses en raison des moyens de traitement d'image reçues par chaque caméra. L'utilisation d'une pluralité de caméra nécessite aussi un moyen de synchronisation des séquences d'images acquises, de façon à pouvoir inspecter des zones précises de bande en défilement. Ce moyen de synchronisation devient fort complexe dès lors que la vitesse de défilement de la bande est variée (par exemple selon son format/type variable) et en particulier augmentée, à quoi s'ajoute la nécessité de prévoir des caméras à haute vitesse d'acquisition dont les coûts sont importants et proportionnels au nombre de caméras. Une robustesse d'inspection dynamique est alors atteinte sous des conditions de forte complexité technique et donc de coûts élevés.

Un but de la présente invention est donc de proposer un dispositif d'inspection de bande en défilement pour lequel les moyens de traitement d'images issus dudit dispositif sont les plus simples possibles tout en présentant une robustesse d'inspection dynamique suffisante compte tenu des intervalles de vitesse plus ou moins haute de défilement de bande.

Une solution d'un tel dispositif est présentée au travers des caractéristiques de la revendication 1.

Un ensemble de sous-revendications présente également des avantages de l'invention.

A partir d'un dispositif d'inspection de bande en défilement selon une direction comprenant un premier arrangement d'illumination sur une zone couvrant au moins la largeur de la bande et un deuxième arrangement d'acquisition d'images de ladite zone, l'invention prévoit que le dit dispositif est caractérisé par :
- un troisième arrangement d'illumination sur la zone,
- le dit troisième arrangement illuminant sous une longueur d'onde différente d'une longueur d'onde d'illumination du premier arrangement ,
- des angles d'incidence des axes optiques principaux d'illumination du premier et du troisième arrangement sont différents par rapport à la direction de défilement de la bande, ainsi qu'à une direction d'un axe optique principal du deuxième arrangement d'acquisition d'images comprenant un mode d'acquisition de deux images simultanées sous deux spectres centrés sur les deux longueurs d'ondes,
- le mode d'acquisition étant au moins régi par une vitesse d'acquisition d'image définie en fonction d'une vitesse de défilement de la bande et d'au moins une valeur de seuil minimal de rapport signal-bruit extraite des deux spectres d'acquisition.

La valeur de seuil minimal permet de garantir une inspection dans un cadre de tolérance adapté à la vitesse de défilement de la bande ainsi qu'au type/format de bande. Si celui-ci n'est pas respecté, l'inspection doit donc être soumise à un nouveau mode d'acquisition selon l'invention, de façon à garantir la robustesse d'inspection dynamique souhaitée. L'extraction des rapports signal-bruit (ou autre équivalent de qualité de signal) des deux spectres d'acquisition peut se faire par des moyens connus par l'homme du métier à partir de valeurs d'intensité acquises sous chacun desdits spectres.

Le premier et le troisième arrangement d'illumination sont activés préférentiellement simultanément, en continu ou même sous un mode pulsé synchrone (à au moins une plus haute fréquence qu'une fréquence d'acquisition d'image du second arrangement). Ainsi, la vitesse d'acquisition du second arrangement d'acquisition est avantageusement car simplement l'unique paramètre à régler en fonction de la vitesse de défilement de la bande. Ainsi, en cas de changement de format ou de type de bande et donc de vitesse de défilement, un régulateur commandé par l'information de vitesse de défilement de bande commande la vitesse d'acquisition et donc adapte les ressources nécessaires d'un traitement des images issus du second arrangement plus précisément, en particulier aux fins de réduire au maximum un flux d'informations de zones successivement acquises trop superposées (si vitesse de bande basse et vitesse d'acquisition trop haute) et donc d'accélérer l'inspection (en particulier si vitesse d'acquisition d'images inutilement trop haute pour une vitesse élevée de défilement).

Dans le cas où l'arrangement d'acquisition ne comporte qu'une caméra par exemple de type couleur ou du moins spectralement adaptée pour distinguer les deux longueurs d'onde et fournir deux images simultanées de la même zone de bande en défilement, le dispositif selon l'invention est avantageusement le plus simple possible tout en garantissant une haute robustesse d'inspection dynamique puisque les deux images ainsi obtenues sont intrinsèquement synchrones temporellement et assure deux captures spatiales identiques de la zone inspectée.

Le deuxième arrangement peut comporter plusieurs caméras identiques par leur haute vitesse d'acquisition et commandées par un signal commun de synchronisation assurant une capture simultanée de couples d'images. Cette configuration de caméras par exemple réparties sur la largeur de la bande en défilement et faisant l'acquisition d'images de sous-zone de la zone inspectée requiert toutefois une reconstruction des images adjacentes si une inspection de la zone complète est souhaitée. Cette reconstruction peut être obtenue par un calibrage de l'arrangement d'acquisition sur un étalon ou par un procédé de reconnaissance de caractéristiques dans les images acquises et permettant d'accoupler ces images par traitement digital d'images.

Afin toutefois de limiter le nombre de caméras ou autres capteurs synchronisables d'image, il est possible d'augmenter le nombre d'arrangements d'illumination, sachant que leurs spectres d'illumination sont centrés sur des longueurs d'ondes décalées que préférablement une seule caméra peut enregistrer simultanément et distinctement. Idéalement, le dispositif selon l'invention comporte ainsi deux rampes d'éclairage par exemple une rampe émettant une première longueur d'onde et une rampe émettant une deuxième longueur d'onde ou tout autre moyen d'éclairage et une caméra couleur, ces trois composantes étant couplés à une unité de commande, ladite caméra délivrant de plus une image rafraîchit à haute vitesse sous les deux spectres isolables optiquement ou digitalement en temps réel. Selon ce schéma, le premier et le troisième arrangement comprennent des rampes à diodes électroluminescentes ou tout autre moyen d'éclairage linéairement disposé(es) dans chaque rampe s'étendant sur ou du moins illuminant la largeur de bande en défilement, les dites diodes de chaque rampe étant idéalement distinctes par leur spectre respectif centré sur chacune des longueurs d'onde. Plus précisément, les diodes sont disposées linéairement dans chaque rampe étendue sur la largeur de la bande afin de permettre via une optique appropriée (comme celle explicitée dans le brevet FR 05 13105) une illumination sur une zone couvrant la largeur de la bande (perpendiculaire à la longueur de bande parallèle à la direction de défilement). Cette zone illuminée est ainsi principalement longiligne ou rectangulaire dont un grand bord suit la largeur de la bande.

Du fait de l'utilisation d'au moins deux rampes de diodes électroluminescentes en guise de premier et de troisième arrangement d'illumination, ces rampes forme chacune un rideau de lumière plus ou moins épais et d'au moins la largeur de la bande sur sous par exemple deux angles dont un est rasant (par exemple inférieur à 30°, idéalement 10, 15, 20°) et l'autre plus oblique (par exemple supérieur à 30°, idéalement 45, 50, 55°) par rapport à la direction de défilement de la bande. L'angle à caractère rasant étant celui correspondant à une des longueurs d'onde et l'angle à caractère plus oblique correspondant à une autre des longueurs d'onde , cette configuration de dispositif selon l'invention a montré, en particulier sur des surfaces métalliques de bande que le choix de ces spectres centrés chacun sur une des deux longueurs d'onde respectivement sous un des deux angles améliore la dynamique de détection de géométries plus complexes et variées de catalogues de défauts connus pour des bandes d'acier en défilement dans diverses installations de traitement métallurgique. Cette amélioration est ainsi simultanément possible tout en évitant avantageusement d'augmenter le nombre de caméras et ainsi le nombre de moyens de commande et de traitement d'image des caméras.

Le nombre de rampes à diodes électroluminescentes ou tout autre moyen de rampe d'éclairage n'est pas limité à deux mais peut être augmenté en relation avec une troisième longueur d'onde et un angle d'incidence sur la bande. La caméra couleur en tant qu'arrangement d'acquisition est alors utilisée par exemple pour délivrer une image sous trois couleurs décomposables optiquement ou digitalement en temps réel. Analogiquement au cas précédent évoqué avec deux rampes, le traitement de telles images couleurs est simple et rapide, car il est effectuable au moyen de processeurs parallèles (FPGA, Look-up-table, etc.) et ne requiert pas une fusion de données pré-calibrées et de type « multi-flux » car provenant de plusieurs caméras distinctes, chacune étant destinée à acquérir une image sous une des longueurs d'ondes utilisées.

Un exemple de réalisation du dispositif selon l'invention est fourni à l'aide de figures décrites :
- Figure 1: Exemple de dispositif d'inspection selon l'état de la technique,
- Figure 2: Exemple de dispositif d'inspection selon l'invention.

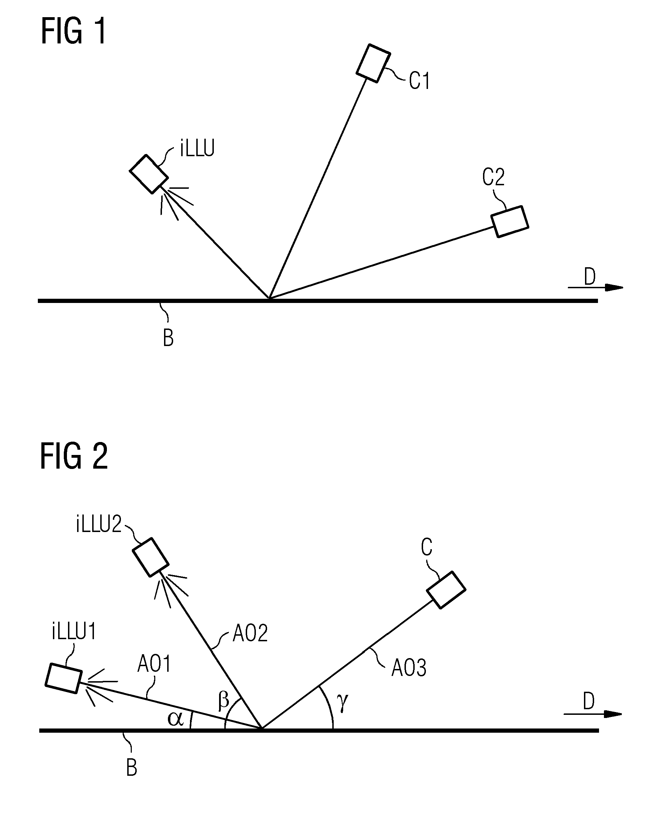

Figure 1 présente, en coupe longitudinale suivant une direction de défilement (D), un dispositif d'inspection connu d'une bande d'acier (B) en défilement comprenant un premier arrangement d'illumination (ILLU) sur une zone rectangulaire couvrant au moins la largeur de la bande et un deuxième arrangement d'acquisition d'images de ladite zone à inspecter. Le deuxième arrangement comprend une première caméra (C1) de type noir et blanc (ou délivrant des niveaux de gris) tel que dans le brevet FR 05 13105), ainsi que une seconde caméra (C2) du même type de façon à obtenir deux directions oblique et rasante d'acquisition d'images tel que discuté précédemment. Les composantes de commandes et de traitement d'images (en particulier lié parallèlement à chacune des caméras C1, C2) ne sont pas représentées pour des raisons de clarté.

Figure 2 présente sous la même vue en coupe que figure 1 le dispositif d'inspection selon l'invention. Ledit dispositif d'inspection de bande (B) en défilement comprend un premier arrangement d'illumination (ILLU1) sur une zone couvrant au moins la largeur de la bande et un deuxième arrangement d'acquisition d'images (C) de ladite zone, et est caractérisé par :
- un troisième arrangement d'illumination (ILLU2) sur la zone,
- le dit troisième arrangement illuminant sous une longueur d'onde différente d'une longueur d'onde d'illumination du premier arrangement ,
- et des angles d'incidence (α, β) des axes optiques principaux (AO1, A02) d'illumination du premier et du troisième arrangement qui sont différents par rapport à la direction (D) de défilement de la bande, ainsi qu'à une direction (γ) d'un axe optique principal (A03) du deuxième arrangement d'acquisition d'images comprenant un mode d'acquisition de deux images simultanées sous deux spectres centrés sur les deux longueurs d'ondes,
- le mode d'acquisition étant au moins régi par une vitesse d'acquisition d'image définie en fonction d'une vitesse de défilement de la bande et d'au moins une valeur de seuil minimal de rapport signal-bruit extraite des deux spectres d'acquisition..

Suite aux explications précédents les figures, le premier arrangement d'illumination comprend une rampe à diodes électroluminescentes à haute puissance ou tout autre moyen de rampe d'éclairage autour d'une première longueur d'onde et le troisième arrangement d'illumination comprend une rampe à diodes électroluminescentes à haute puissance autour d'une deuxième longueur d'onde distincte de la première longueur d'onde. Le deuxième arrangement d'acquisition d'images (C) comprend une caméra couleur.

Ici encore non représentées pour des raisons de clarté, les composantes de commande du dispositif d'inspecticn sont couplées aux deux rampes (ILLU1, ILLU2) ainsi qu'à la caméra (C) et avantageusement une unique unité de traitement d'images est couplée à la caméra (C).

## Revendications

1. Dispositif d'inspection de bande (B) en défilement comprenant un premier arrangement d'illumination (ILLU1) sur une zone couvrant au moins la largeur de la bande et un deuxième arrangement d'acquisition d'images (C) de ladite zone,
**caractérisé par** :
- un troisième arrangement d'illumination (ILLU2) sur la zone,
- le dit troisième arrangement illuminant sous une longueur d'onde différente d'une longueur d'onde d'illumination du premier arrangement ,
- et des angles d'incidence (α, β) des axes optiques principaux d'illumination du premier et du troisième arrangement sont différents par rapport à la direction (D) de défilement de la bande, ainsi qu'à une direction (γ) d'un axe optique principal du deuxième arrangement d'acquisition d'images comprenant un mode d'acquisition de deux images simultanées sous deux spectres centrés sur les deux longueurs d'ondes,
- le mode d'acquisition étant au moins régi par une vitesse d'acquisition d'image définie en fonction d'une vitesse de défilement de la bande et d'au moins une valeur de seuil minimal de rapport signal-bruit extraite des deux spectres d'acquisition.

2. Dispositif selon revendication 1, pour laquelle le premier et le troisième arrangement comprennent des rampes à diodes électroluminescentes ou tout autre moyen d'éclairage linéairement disposé(es) dans chaque rampe s'étendant sur la largeur de bande, les dites diodes de chaque rampe étant idéalement distinctes par leur spectre respectif.

3. Dispositif selon une des revendications 1 à 2, pour lequel le deuxième arrangement d'acquisition d'images comprend au moins une caméra couleur.
